# EUROPEAN PATENT SPECIFICATION

(11) **EP 1 079 761 B1**
(45) Date of publication and mention of the grant of the patent: **28.07.2004**
(21) Application number: 99925267.9
(22) Date of filing: 21.05.1999
(51) Int. Cl.: A61C 19/045, A61C 19/05

(54) **EQUIPMENT FOR CARRYING OUT FIXED AND MOVABLE DENTAL PROSTHESIS**
EINRICHTUNG ZUR HERSTELLUNG VON FESTEN ODER BEWEGLICHEN ZAHNPROTHESEN
EQUIPEMENT SERVANT A REALISER DES PROTHESES DENTAIRES FIXES ET MOBILES

(30) Priority: 21.05.1998 IT MI981119
(43) Date of publication of application: 07.03.2001
(73) Proprietor: Tomasini, Gianni, 20144 Milano (IT)
(72) Inventor: Tomasini, Gianni, 20144 Milano (IT)
(74) Representative: Pizzoli, Pasquale Vincenzo
(86) International application number: PCT/IT1999/000144
(87) International publication number: WO 1999/059497

(56) References cited:
- DE-A- 4 211 017
- US-A- 2 334 898
- US-A- 3 574 259
- US-A- 4 304 551

## Description

The present invention relates to an equipment for executing permanent and movable dental prostheses quickly and without using mastication waxes.

The reconstruction of the so-called simple prostheses, with techniques that turn out to be expensive because of the great amount of time requested for executing them, is known to be the problem arising with relative frequency in dentistry. Further, the techniques of the state of the art are known to involve the use of the so-called mastication waxes, which are disadvantageous as they often result in condyle dislocation and therefore in the execution of a prosthesis unsuitable for that patient.

DE -A-4 211 017 discloses a facial arch for carrying out the dental measuments preliminary to the execution of dental prostheses, comprising an auricular collimation device horizontally mounted inside a vertical spacer which bears a bite plate suitable for being inserted into the patient's mouth, between the jaws, in order to determine the position of the denture with respect to that of the condyles.

However, owing to the invasive character of said bite plate, this known facial arch brings about a condyle dislocation and therefore cannot provide a reliable measurement, especially if some teeth are present in the mouth.

Therefore, object of the present invention is providing an equipment allowing both permanent and movable dental prostheses to be executed, without the above mentioned disadvantages.

Said object is obtained by means of an equipment comprising an apparatus for carrying out the necessary dental measurements and a group of metal cores and pins for preparing the impressions. The main features of said equipment are specified in claim 1 and other features are specified in the following claims.

Besides enabling the dental technician to carry out quickly and precisely the necessary registrations, the equipment according to the present invention offers the further advantage of being easily handled and used.

Another advantage offered by the equipment according to the present invention is that, besides enabling impressions to be taken without using mastication waxes, it reduces to only two or three the number of sittings necessary for the prostheses execution.

These and other advantages will be apparent to those which are skilled in the art from the following detailed description of one embodiment thereof, with reference to the accompanying drawings, wherein:
- Figure 1 shows a perspective view of a measuring apparatus according to the present invention;
- Figure 2 shows another member of the apparatus of Figure 1;
- Figure 3 shows a further member of the apparatus of Figure 1;
- Figure 4 shows an accessory of the apparatus of Figure 1;
- Figure 5 shows the use of the measuring apparatus according to the present invention;
- Figures 6 and 6bis show the use of a simplified embodiment of the measuring apparatus according to the present invention;
- Figures 7 to 10 show few embodiments of the metal cores for the impression preparation by the equipment according to the present invention; and
- Figure 11 shows a writing pin that belongs to the group for the impression preparation by the equipment according to the present invention.

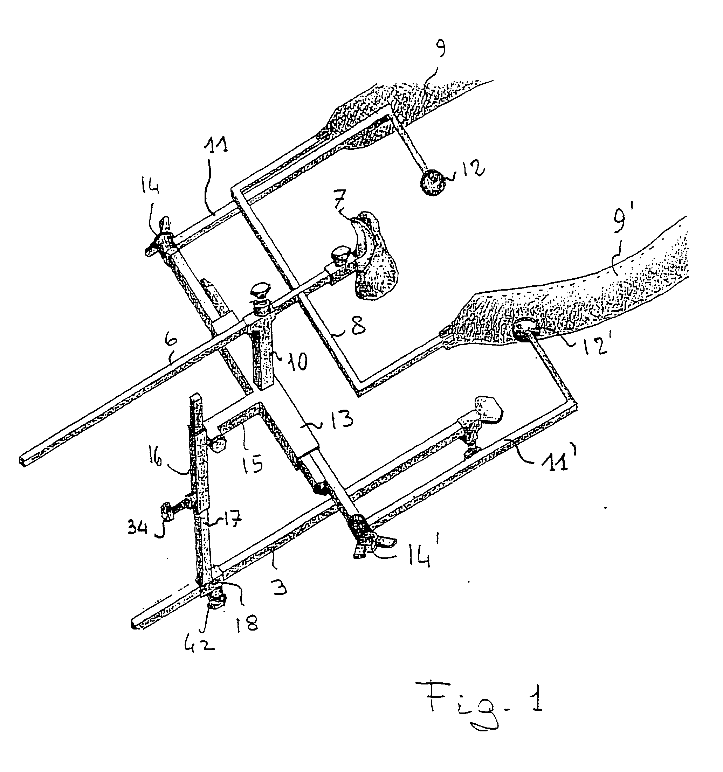

With reference to Figure 1, the measuring apparatus according to the present invention is shown to comprise a nasal collimation device 1 connected to an underlying auricular collimation device 2 and, under this, a horizontal graduated rod 3 suitable for supporting the palatal collimation device 4 or the labial collimation device 5 is slidably mounted.

The nasal collimation device 1, of a known kind, is substantially formed of a bar 6 bearing, at one end, a nosepiece 7, which is anatomically structured so as to rest on the patient's nasal septum. Said nosepiece bears a seat receiving the end of bar 6, whereto it is applied. Bar 6 is integral with a transversal bar 8, that is orthogonal to bar 6 and bears at its free ends straps 9 and 9'. The ends of straps 9 and 9' are provided with means for fastening them around the patient's head. In the simplest embodiment, the ends of straps 9 and 9' are provided with a Velcro tape (not shown).

Bar 6 can slide horizontally inside a bush that is positioned at the upper end of a vertical spacer 10 bearing at the base the auricular collimation device 2.

Auricular collimation device 2, also of a known kind, is substantially formed of two specularly identical brackets, 11 and 11', each having one end provided with clamping balls 12 and 12'. These balls are intended to rest precisely inside the cavity of the patient's auricle concha. The free ends of the brackets I 1 and 11' are slidably mounted inside a horizontal tubular housing 13 positioned at the base of vertical spacer 10. In the embodiment shown in the drawing, the throw of brackets 11 and 11', next to the relevant free end, is respectively articulated with wing nuts 14 and 14'. In a simplified embodiment, brackets 11 and 11' are produced with round sectioned metal rod, which eliminates the need for wing nuts 14 and 14'. In fact, in that case, the ends of brackets 11 and 11' can be rotated inside housing 13 and fixed in the desired position by means of a check pin.

The free ends of brackets 11 and 11' can slide horizontally inside housing 13 and are stopped in the desired position by means of a setscrew (not shown in the figure) which is positioned under spacer 10.

The back of housing 13 is provided with a horizontal extension 15 bearing at one end a second vertical spacer 16, intemally hollow, inside which a small shaft 17 is slidably housed. This bears at the base a horizontal bush 18 that slidably receives graduated rod 3. Rod 3 can be brought to the desired position and there blocked by means of a screw pin 42 positioned under bush 18. Another screw pin 34 is used to fasten shaft 17 at a certain height inside vertical spacer 16.

Graduated rod 3 has a millimetric scale that allows the horizontal position of collimation device 4 or 5 to be exactly determined when this, being fastened at the end of graduated rod 3, is used in the measuring practice. After having slid rod 3 until device 4 or 5 reaches exactly the patient's palatal cupula or lips, the rod is fastened by screw pin 42, the measure is read on the graduated scale and the value is communicated to the dental technician.

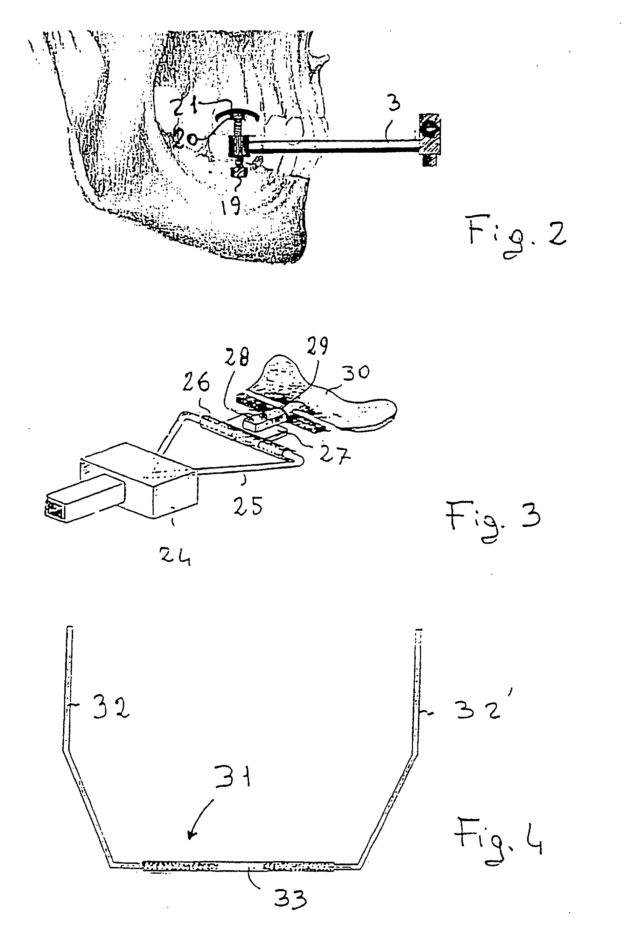

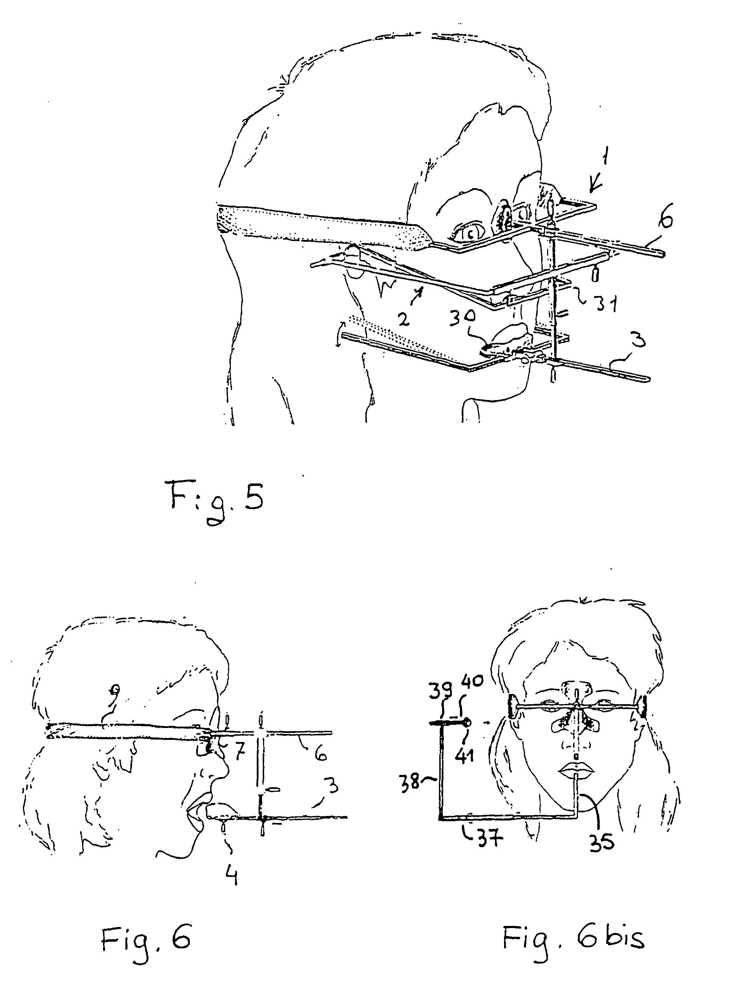

With reference to Figure 2, palatal collimation device 4 is seen to comprise substantially a threaded pin 19 intended to be screwed into a base 20, internally hollow and provided with a thread. Such a base supports a plate 21, both base and overlying plate being intended to be incorporated into the paste for impressions that is to be used for molding the patient's palatal zone, as described in the following. While using the equipment, plate 21 will be positioned exactly at the patient's palatal cupula and that position will be read on the millimetric scale of rod 3. Graduated rod 3 has at the distal end, with respect to the millimetric graduation, a hole suitable for housing pin 19 of collimation device 4.

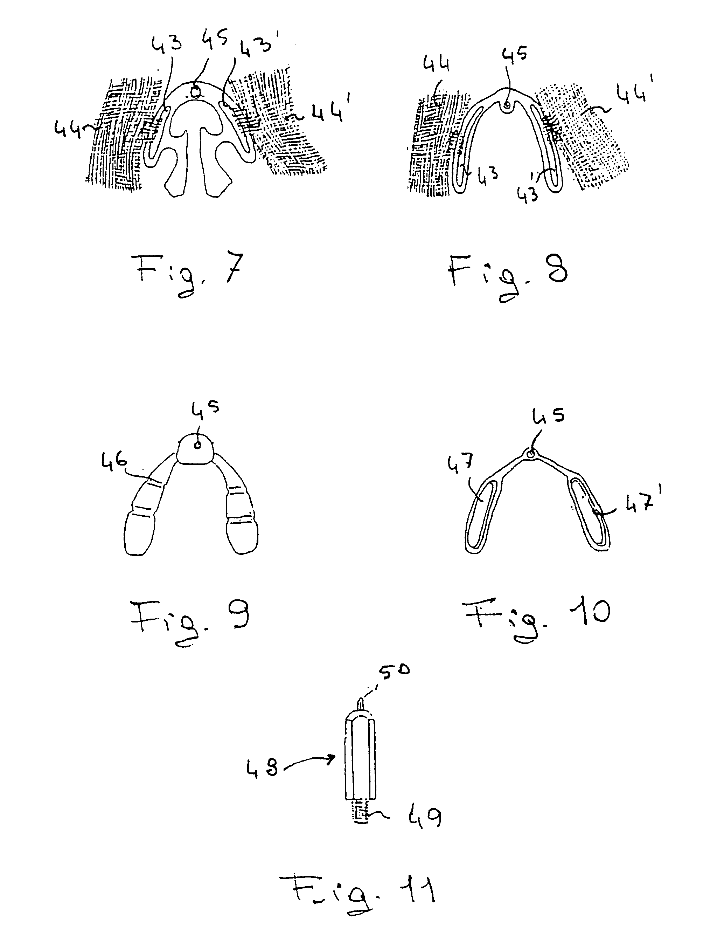

With reference to Figure 3, there is shown the other collimation device that forms the apparatus according to the present invention, i.e. labial collimation device 5. This is substantially formed of a threaded pin, provided with a screw or nut head, having the other end suitable to be screwed into a plaque holder contrivance. This contrivance comprises a base 24 bearing a support 25 that can be opened, whereinto a sleeve 26 is inserted. Sleeve 26 bears a plate 27 on which a sheath 28 is fastened, wherein a rod 29, bearing at the end the labial plaque 30, can be secured. Said plaque is anatomically shaped as shown in the figure and is intended to be introduced between the patient's lips. In such a position plaque 30 divides the two parts of the teethless mouth and serves for all the registrations in the execution of the upper and lower complete prostheses (dentures).

With reference to Figure 4, the measuring apparatus according to the present invention is seen to comprise also bracket 31 serving for determining the Kamper plane. It is preferably shaped with the two arms 32 and 32' substantially parallel in order to allow a perfect alignment with the patient's face. The two arms 32 and 32' have one free end while the other end is sliding inside a sleeve 33. In this way the two arms can be driven near and away from each other, according to the patient's face size. Sleeve 33 is provided with two screw pins (not shown in the figure) in order to block the two bracket arms in the requested position. Bracket 31 is applied on the patient's face so that sleeve 33 fits to the nasal septum and the ends of the two arms 32 and 32' correspond to the patient's ear tragus.

Since it is known that the position of the body affects the one of the jaw, it is always necessary to value the vertical dimension at rest when the patient is standing or sitting in a usual, symmetrical position. By means of a spirit level placed on collimation device 1, it is easily possible to balance perfectly the patient's head with the nuchal and vertebral muscles. The horizontal position of nasal collimation device 1 and therefore the patient's body vertical position can be determined by centering the bubble in the glass tube. This preliminary operation is very important to determine the positions that are technically named vertical dimension and centric occlusion. The applicant has produced a small spirit level provided with a small central sleeve, allowing the insertion thereof on the free end of bar 6.

With reference to Figure 5 the measuring apparatus according to the present invention is shown applied on a patient's head. With the help of a spirit level, bar 6 has been brought to a perfectly horizontal position, whereupon auricular collimation device has been brought to the position in which clamping balls 12 and 12' are positioned exactly inside the patient's auricle.

The Figure also shows bracket 31 positioned for determining the Kamper plane.

In the Figure, graduated rod 3 bears the labial plaque 30 serving for the registrations requested to execute both upper and lower complete prostheses (dentures).

In Figure 6 another embodiment of the measuring apparatus according to the present invention is shown in the use wherein graduated rod 3 bears at the end palatal collimation device 4. The Figure shows the moment in which the operator, after having read on the graduation of graduated rod 3 the exact position of palatal collimation device 4 inside the patient's mouth (position illustrated in Figure 2), has loosened threaded pin 42 and slid rod 3 sideways as to pull out palatal collimation device 4, whereon the patient's palatal impression is left.

The apparatus shown in Figure 6bis represents a second embodiment of the measuring apparatus according to the present invention. In comparison with the one shown in Figure 1, it is structurally simplified and differs from that one in that auricular collimation device can be separated from nasal collimation device to be replaced from graduated rod 3. In this embodiment auricular collimation device is not fastened inside tubular housing 13 positioned at the base of vertical spacer 10, but directly inside said spacer, that is internally hollow, and where it can be maintained by means of a threaded pin in the position of adjustment to the patient's face. In this simplified embodiment auricular collimation device 2 is substantially formed of a square having one quadrate sectioned arm 35 suitable to be inserted inside vertical spacer 10 and of a orthogonal arm 36 having a round section and internally hollow. The internal cavity of arm 36 is intended to house free end 37, bent at 90°, of rod 38, also having a round section and a size so as to allow its insertion inside the cavity of arm 36 of said square.

The other end of rod 38 bears a sleeve 39 parallel to end 37 bent at right angles and suitable for slidably receiving the stem 40 of a clamping ball 41. This very simplified embodiment can be used indifferently on anyone of the patient's ears. This is accomplished by pulling the quadrate sectioned arm 35 out from vertical spacer 10 and by reinserting it after a 180° rotation on the horizontal plane and by rotating then rod 38 of 90° on the vertical plane, as far as clamping ball 41 has reached the patient's auricle. In order to adjust the position of clamping ball 41 inside the patient's ear, the stem 40 thereof is slid inside sleeve 39 until the optimal position is obtained. Once the so-called typical spatial position of the patient is determined, the simplified auricular collimation device is pulled out from the lower end of spacer 10 and replaced with shaft 17 (shown in Figure 1) bearing at the end graduated rod 3.

The applicant has discovered that, when the paste for impressions is applied onto the patient's palate, something can be conveniently incorporated thereinto, in order to render the paste firmer, without affecting its shapability. Further, in order to avoid condyle dislocation, which the present invention intends to eliminate, the paste must not invade the space between the teeth. This is obtained, according to the present invention, with the group of metal cores which is also subject matter of the present invention.

In Figures 7 and 8 two embodiments of metal cores forming an object of the apparatus according to the present invention are shown. The embodiment shown in Figure 7 is used for preparing impressions for the upper permanent prostheses, while the embodiment shown in Figure 8 is used for preparing impressions for the lower permanent prostheses. The metal core of Figure 7 has a particular shape, approximately resembling a half-moon with a large radial slit that makes it more shapable. In fact, this core has to be hand shaped in order to be adapted as far as possible to the patient's palate surface. Furthermore, it is provided with slits 43 and 43' serving to hold respectively one hem of segment of wire net 44 and 44'. The most suitable net for this purpose is a brass net of the kind used by sculptors for stiffening plastiline models. A net having these features can guarantee cohesion of the pasty mass, particularly in the parts corresponding to the teethless zones, or to the zones with filed teeth, in the patient's mouth. The wire net, being very adaptable, can be easily shaped also over the mutilated teeth, already prepared for the prosthesis. The rest of the metal core is preferably made of tin.

Both metal cores are provided, in the incisor area, with an internally threaded hole 45. Such a hole is intended to receive another member of the apparatus according to the present invention, that is a pin whose structure and function will be described in detail with reference to Figure 11.

The embodiments of metal cores shown in Figures 9 and 10 serve for preparing impressions necessary for executing movable, that is total, prostheses. Their shape resembles approximately that of a horse shoe and they are provided with an internally threaded hole 45, that has the same purpose above mentioned with reference to Figures 7 and 8. The metal core shown in Figure 9 serves for preparing the upper impression and is provided with one or more notches 46 having the purpose of creating reference points in the paste for impressions previously positioned in the cavities of the metal core of Figure 10. Said reference points are useful when upper and lower impressions are joined and sent to the dental technical laboratory. In Figure 10 can be seen the two cavities 47 and 47' containing the paste for impressions. Since this metal cores are used for impressions in teethless mouths, the use of wire net segments 44 and 44' can turn out to be unnecessary.

First, in order to prepare the impression, the paste for impressions whereinto the metal core of Figure 7 has been for example incorporated, is pressed in the known way against the patient's palate. When the technician realizes that the core incorporating paste adheres perfectly to the patient's palate, he creates with his finger a niche corresponding to the palatal cupula and then lets the impression harden. Once this hardemng has taken place, a further small quantity of paste for impressions is inserted in the so obtained niche, whereinto plate 21 with the relevant threaded base 20 of palatal collimation device 4 are inserted. Both plate 21 and corresponding base 20 remain in position also while the paste hardens. Once the measuring apparatus according to the present invention has been mounted on the patient's head, graduated rod 3 is moved forward inside the mouth until threaded pin 19 mounted on rod 3 reaches threaded base 20 incorporated in the hardened paste and then pin 19 is screwed into the base itself. In this way, an impression is obtained while avoiding the paste to get in contact with the teeth and also the use of the so-called mastication waxes. This impression, once pulled out from the patient's mouth, can be used for the next shaping operations of the prosthesis.

Another important member of the apparatus according to the present invention is formed of a set of eight pins 48 whose increasing length is included between 6 and 20 mm, which allow the position of the patient's jaws to be raised and lowered while millimetrically calculating the different positions which the technician looks for in order to find the so-called free space in the patient. This expression is well known to all dental technicians and therefore needs no further explanation.

With reference to Figure 11, it can be seen that pin 48 has substantially a prismatic shape with a preferably hexagonal section. A threaded tang 49 protrudes from the base thereof, which is useful for screwing pin 48 into holes 45 provided in the incisor area of the metal cores shown in the Figures 7 to 10. Pin 48 is internally hollow and in the cavity thereof is housed a thin graphite lead 50 which is moved forward, as it is consumed, by an adjusting screw (not shown in the Figure) which is positioned inside threaded tang 49.

When a pin 48 is screwed inside hole 45 of the cores of Figure 7 or 9, a plate, suitable to be marked by the tip of lead 50 housed inside pin 48, is screwed in the hole 45 of the facing shapes of Figure 8 and 10. Obviously, when pin 48 is screwed in holes 45 of the cores shown in Figures 8 and 10, the procedure is inverted. When the patient's two jaws are touching in front, the tip of lead 50 leaves a sign on the underlying plate. The patient is therefore invited to open and close repeatedly the mouth and the technician will be able to check whether the mark left each time by the tip of the lead 50 on the plate coincides with the former ones. This constitutes an evidence that the patient opens and closes the mouth always in the same way. Should that not be the case, the technician, still with the help of the pin with the writing tip, succeeds after many trials to identify the position that he considers as the most correct.

In order to determine the so-called free space, the technician chooses one pin 48 of the set which is subject matter of the present invention and tries it. If the pin has not the right length, the technician changes it with a longer or shorter one, according to the case. Since the difference in height between one pin and the closest of the set is 2mm, if the last tried pin is not exactly the desired one, it can be rotated once inside hole 45, thus obtaining an increase in height of 1 mm so as to reach a better approximation in the identification of the so-called free space.

## Claims

1. Equipment for executing permanent and movable dental prostheses comprising an apparatus for dental measurements, a group of metal cores and a set of pins for the preparation of the impressions, said apparatus for dental measurements comprising a nasal collimation device (1) connected to an underlying auricular collimation device (2) by means of a vertical spacer (10), wherein a graduated rod (3) is horizontally, slidably mounted inside a second vertical spacer (16) under the auricular collimation device (2), said graduated rod (3) bears at one end thereof either a palatal collimation device (4) comprising a plate (21) suitable for resting under the patient's palate and for being incorporated in a paste for dental impressions, or a labial collimation device (5) comprising an anatomically shaped plaque (30) suitable for resting between the patient's lips and for being articulately connected with the end of the graduated rod (3).

2. Equipment according to claim 1, **characterized in that** the palatal collimation device (4) comprises a threaded pin (19) applicable to the end of the graduated rod (3), an internally threaded base (20) suitable for being screwed to the threaded pin (19) and bearing said plate (21).

3. Equipment according to claim 1, **characterized in that** the labial plaque (30) is articulately connected to the graduated rod (3) by means of a base (24) applicable to the graduated rod (3) and bearing a support (25) that can be opened, inside which is inserted a sleeve (26) bearing a plate (27) on which is fastened a sheath (28) inside which can be fixed a rod (29) that bears at the end the labial plaque (30).

4. Equipment according to claim 3, **characterized in that** said apparatus for dental measurements comprises also a bracket (31) formed of two arms (32, 32') having one free end parallel to that of the other arm and the other end bent at 90° with respect to the first one and slidable inside a sleeve (33).

5. Equipment according to the preceding claims, **characterized in that** said apparatus for dental measurements comprises also a spirit level applied to the nasal collimation device (1).

6. Equipment according to claim 1, **characterized in that** said auricular collimation device is formed of a square having one quadrate sectioned arm (35) suitable to be slidably inserted inside the vertical spacer (10) and of a round sectioned arm (36), internally hollow, intended to receive an end (37) bent at right angles, of a round sectioned rod (38), bearing at the other end a sleeve (39) parallel to end (37) and slidably receiving the stem (40) of a clamping ball (41).

7. Equipment according to claim 1, **characterized in that** the metal cores for the preparation of the impressions for the execution of permanent dental prostheses are provided with slits (43, 43') that retain hems of wire nets (44, 44') and with an internally threaded hole (45) positioned in the area of the incisor teeth, wherein the core for the upper impression has substantially the shape of a half-moon and is provided with one radial slit and the core for the lower impression has substantially the shape of a horse shoe.

8. Equipment according to claim 1, **characterized in that** the metal cores for the preparation of the impressions for the execution of movable dental prostheses have substantially the shape of a horse shoe, wherein the metal core for the upper impression is provided with one or more notches (46) and the metal core for the lower impression is provided with two cavities (47, 47'), both metal cores being provided with one intemally threaded hole (45) positioned in the area of the incisor teeth.

9. Equipment according to claim 1, **characterized in that** each pin (48) of said set has a substantially prismatic shape (48) having at the base a threaded tang (49) and an internal longitudinal cavity wherein a graphite lead (50) is housed, whose tip is suitable to protrude from the pin tip.

10. Equipment according to the preceding claim, **characterized in that** said set of pins is composed of eight pins having an increasing length included between 6 and 20 mm.

## Patentansprüche

1. Apparatur zum Anfertigen permanenter und beweglicher Zahnprothesen mit einem Gerät für Zahnmessungen, einer Gruppe von Metallkemen und einem Satz von Stiften für die Präparation der Abformungen, das Gerät für Dentalmessungen umfasst eine nasale Kollimationsvorrichtung (1), die mit einer darunter liegenden aurikulären Kollimationsvorrichtung (2) mittels eines vertikalen Abstandshalters (10) verbunden ist, wobei ein skalierter Stab (3) innerhalb eines zweiten vertikalen Abstandshalters (16) unter der aurikulären Kollimationsvorrichtung (2) horizontal verschiebbar befestigt ist, der skalierte Stab (3) an einem seiner Enden entweder eine palatale Kollimationsvorrichtung (4) mit einer Platte (21), die geeignet ist, unter dem Palatal des Patienten zu ruhen und in eine Paste für dentale Abformungen aufgenommen zu werden, oder eine labiale Kollimationsvorrichtung (5) mit einer anatomisch geformten Scheibe (30) aufweist, die geeignet ist, zwischen den Lippen des Patienten zu ruhen und mit dem Ende des skalierten Stabs (3) gelenkig verbunden zu werden.

2. Apparatur gemäß Anspruch 1, **dadurch gekennzeichnet, dass** die palatale Kollimationsvorrichtung (4) einen Gewindestift (19) aufweist, der an dem Ende des skalierten Stabs (3) anbringbar ist, eine intern gewundene Basis (20) aufweist, die geeignet ist, mit dem Gewindestift (19) verschraubt zu werden und die Platte (21) zu halten.

3. Apparatur gemäß Anspruch 1, **dadurch gekennzeichnet, dass** die labiale Scheibe (30) mit dem skalierten Stab (3) mittels einer Basis (24), die an dem skalierten Stab (3) anbringbar ist, gelenkig verbunden ist und einen Träger (25) aufweist, der geöffnet werden kann, worin eine Hülse (26), die eine Platte (27) trägt, eingeführt ist, worauf eine Scheide (28) befestigt ist, in der ein Stab (29) fixiert werden kann, der an dem Ende die labiale Scheibe (30) trägt.

4. Apparatur gemäß Anspruch 3, **dadurch gekennzeichnet, dass** das Gerät für dentale Messungen auch eine Klammer (31) aufweist, die aus zwei Armen (32, 32') mit einem freien Ende parallel zu demjenigen des anderen Arms und dem anderen Ende um 90° in Bezug auf das erste Ende gebogen und verschiebbar innerhalb einer Hülse (33) ausgebildet ist.

5. Apparatur gemäß den vorhergehenden Ansprüchen, **dadurch gekennzeichnet, dass** das Gerät für Dentalermessungen einen Wasserwaage aufweist, die auf die nasale Kollimationsvorrichtung (1) angewendet wird.

6. Apparatur gemäß Anspruch 1, **dadurch gekennzeichnet, dass** die aurikuläre Kollimationsvorrichtung aus einem Quadrat mit einem Arm (35) mit quadratischem Durchschnitt, der geeignet ist, in den vertikalen Abstandshalter (10) verschiebbar eingeführt zu werden, und aus einem Arm (36) mit rundem Querschnitt ausgebildet ist, der intern hohl ist und dazu vorgesehen ist, ein rechteckig gebogenes Ende eines Stabs (38) mit rundem Querschnitt zu empfangen, der an dem anderen Ende eine Hülse (39) parallel zu dem Ende (37) aufweist und den Stamm (40) eines aufspannenden Balls (41) verschiebbar empfängt.

7. Apparatur gemäß Anspruch 1, **dadurch gekennzeichnet, dass** die Metallkerne für die Präparation der Abformungen für die Anfertigung von permanenten dentalen Prothesen mit Schlitzen (43, 43') bereitgestellt sind, die Säume von Drahtnetzen (44, 44') zurückhalten und mit einem Loch (45) mit internem Gewinde bereitgestellt sind, welches in dem Bereich der Schneidezähne positioniert ist, wobei der Kern für die obere Abformung im Wesentlichen die Form eines Halbmondes aufweist und mit einem radialen Schlitz bereitgestellt ist, und der Kern für die untere Abformung im Wesentlichen die Form eines Hufeisens aufweist.

8. Apparatur nach Anspruch 1, **dadurch gekennzeichnet, dass** die Metallkerne für die Präparation der Abformungen für die Anfertigung von beweglichen dentalen Prothesen im Wesentlichen die Form eines Hufeisens aufweisen, wobei der Metallkern für die obere Abformung mit einer oder mehreren Nuten (46) bereitgestellt ist und der Metallkern für die untere Abformung mit zwei Vertiefungen (47, 47') bereitgestellt ist, wobei beide Metallkerne mit einem Loch (45) mit internem Gewinde bereitgestellt sind, welches in dem Bereich der Schneidezähne positioniert ist.

9. Apparatur gemäß Anspruch 1, **dadurch gekennzeichnet, dass** jeder Stift (48) des Satzes im Wesentlichen eine prismatische Form (48) mit einem gewundenen Zapfen (49) an der Basis und einer internen länglichen Vertiefung aufweist, worin eine Graphitmine (50) untergebracht ist, deren Spitze dazu geeignet ist, von der Stiftspitze hervorzuragen.

10. Apparatur gemäß den vorstehenden Ansprüchen, **dadurch gekennzeichnet, dass** der Satz von Stiften aus acht Stiften mit einer zunehmenden Länge zwischen 6 und 20 mm besteht.

## Revendications

1. Equipement pour réaliser des prothèses dentaires permanentes et mobiles comprenant un appareil pour des mesures dentaires, un groupe de noyau métallique et un jeu de chevilles pour la préparation des empreintes, ledit appareil pour des mesures dentaires comprenant un dispositif de collimation nasale (1) connecté à un dispositif de collimation auriculaire sous-jacent (2) au moyen d'un espaceur vertical (10), dans lequel une tige graduée (3) est montée coulissante horizontalement à l'intérieur d'un second espaceur vertical (16) sous le dispositif de collimation auriculaire (2), ladite tige graduée (3) supportant à une de ses extrémités soit un dispositif de collimation palatal (4) comprenant une plaque (21) adaptée pour rester sous le palet du patient et pour être incorporée dans une pâte pour des empreintes dentaires, soit un dispositif de collimation labiale (5) comprenant une plaque formée de manière anatomique (30) adaptée pour rester entre les lèvres du patient et pour être connectée de manière articulée avec l'extrémité de la tige graduée (3).

2. Equipement selon la revendication 1, **caractérisé en ce que** le dispositif de collimation palatal (4) comprend une cheville filetée (19) applicable à l'extrémité de la tige graduée (3), une base filetée de manière interne (20) adaptée pour être vissée sur la cheville filetée (19) et supportant ladite plaque (21).

3. Equipement selon la revendication 1, **caractérisé en ce que** la plaque labiale (30) est connectée de manière articulée à la tige filetée (3) au moyen d'une base (24) applicable sur la tige filetée (3) et supportant un support (25) qui peut être ouvert, à l'intérieur duquel est inséré un manchon (26) supportant une plaque (27) sur laquelle est fixée un fourreau (28) dans lequel peut être fixée une tige (29) qui supporte à l'extrémité la plaque labiale (30).

4. Equipement selon la revendication 3, **caractérisé en ce que** ledit appareil pour des mesures dentaires comprend également une console (31) formée de deux bras (32, 32') ayant une extrémité libre parallèle à celle de l'autre bras et l'autre extrémité courbée à 90° par rapport à la première extrémité et pouvant coulisser à l'intérieur d'un manchon (33).

5. Equipement selon l'une des revendications précédentes, **caractérisé en ce que** ledit appareil pour mesures dentaires comprend également une nivelle appliquée au dispositif de collimation nasale (1).

6. Equipement selon la revendication 1, **caractérisé en ce que** ledit dispositif de collimation auriculaire est formé d'un carré ayant un bras (35) de section transversale carrée adaptée à être insérée de manière coulissante dans l'espaceur vertical (10) et d'un bras (36) de section transversale ronde creux de manière interne disposé à recevoir une extrémité (37) courbée à angle droit d'une tige (38) à section transversale ronde supportant à l'autre extrémité un manchon (39) parallèle à l'extrémité (37) et recevant de manière coulissante la tige (40) d'une bille de serrage (41).

7. Equipement selon la revendication 1, **caractérisé en ce que** les noyaux métallique pour la préparation des empreintes pour l'exécution de prothèses dentaires permanentes sont pourvus de fentes (43, 43') qui retiennent des bords de treillis (44, 44') et avec un trou fileté de manière interne (45) positionné dans la zone de la dent à inciser, dans lequel le noyau pour l'empreinte supérieure a sensiblement la forme d'une demi-lune et est pourvue d'une fente radiale et les noyau pour l'empreinte inférieure a sensiblement la forme d'un fer à cheval.

8. Equipement selon la revendication 1, **caractérisé en ce que** les noyaux métalliques pour la préparation des empreintes pour l'exécution de prothèses dentaires mobiles ont sensiblement la forme d'un fer à cheval, dans lequel le noyau métallique pour l'empreinte supérieure est pourvu d'une ou plusieurs encoche(s) (46) et le noyau métallique pour l'empreinte inférieure est pourvu de deux cavités (47, 47'), les deux noyaux métalliques étant pourvus d'un trou fileté de manière interne (45) positionné dans la zone de la dent à inciser.

9. Equipement selon la revendication 1, **caractérisé en ce que** chaque cheville (48) dudit jeu a une forme sensiblement prismatique (48) ayant à la base une tige filetée (49) et une cavité longitudinale interne dans laquelle une tête en graphite (50) est logée, dont l'extrémité est adaptée à faire saillie à partir du bout de la cheville.

10. Equipement selon la revendication précédente, **caractérisé en ce que** ledit jeu de chevilles est composé de huit chevilles ayant une longueur qui augmente comprise entre 6 et 20mm.
